# EUROPEAN PATENT SPECIFICATION

(11) **EP 2 513 190 B1**
(45) Date of publication and mention of the grant of the patent: **31.10.2018**
(21) Application number: 10842657.8
(22) Date of filing: 17.12.2010
(51) Int. Cl.: C08G 63/82, C08G 63/183, C08L 67/03, C08K 3/40, C08J 5/00

(54) **POLYESTER COMPOSITIONS WITH GOOD MELT RHEOLOGICAL PROPERTIES**
POLYESTERZUSAMMENSETZUNGEN MIT GUTEN SCHMELZRHEOLOGIEEIGENSCHAFTEN
COMPOSITIONS DE POLYESTER À BONNES PROPRIÉTÉS RHÉOLOGIQUES DE FUSION

(30) Priority: 17.12.2009 US 287609 P
(43) Date of publication of application: 24.10.2012
(73) Proprietor: E. I. du Pont de Nemours and Company, Wilmington, DE 19898 (US)
(72) Inventor: PEACOCK, Judith, Alison, CH-1291 Vaud (CH); WILCZEK, Lech, Wilmington Delaware 19810 (US)
(74) Representative: Heinemann, Monica
(86) International application number: PCT/US2010/061116
(87) International publication number: WO 2011/084702

(56) References cited:
- WO-A1-03/004546
- WO-A1-2005/075563
- WO-A1-2006/018127
- WO-A1-2006/134115
- US-A- 4 098 743
- US-A- 4 391 938
- US-A1- 2004 043 152
- US-A1- 2007 049 667
- US-A1- 2008 167 419
- US-B1- 6 414 084

## Description

### CROSS REFERENCE TO RELATED APPLICATIONS

This application claims priority under 35 USC 119(e) from U.S. Provisional App. No. 61/287609, filed 17 Dec 2009, and currently pending.

### FIELD OF THE INVENTION

The recited invention relates to the field of polyester compositions that exhibit good melt rheological properties as well as to articles made from these and which exhibit good retention of mechanical properties in the solid state upon exposure to humid heat.

### BACKGROUND OF THE INVENTION

Making articles from thermoplastic resins typically involves extrusion and/or injection molding. Details of the shaping and solidification vary depending on equipment and the part to be made, but in general having as high a flow rate of the resin as possible reduces injection time, thereby increasing productivity. Thermoplastic resins having have high flow rates ["highly flowable"] in the molten state are of interest..

A resin that has a relatively lower melt viscosity possesses a relatively higher flow rate, which can decrease production time and reduce production temperature. A relatively faster flow rate allows the molten resin to fill in and conform to the shape of the mold cavity-even complex shapes--and to cool and form the article in a shorter cooling time. Reducing melt viscosity of a thermoplastic resin increases productivity not only by increasing the rate of production but also by decreasing energy consumption, which has inherent environmentally friendly (i.e., "green") effects.

Reducing the melt viscosity of a thermoplastic resin to a level that reduces the production cycle time depends on decreasing the molecular weight of the polymer. However, using low molecular weight thermoplastic resins can result in significant decrease of the mechanical properties of the resin. To achieve and sustain optimum melt rheology without significantly compromising physical properties while reducing the melt viscosity, skilled artisans have added hyperbranched polymers to thermoplastic polymers since about 1990.

U.S. Pat. No. 5,418,301 discloses hyperbranched polyesters that comprise a monomeric or polymeric nucleus having at least one reactive hydroxyl group (A) reacted with a reactive carboxyl group (B) in a branching comonomer unit that has at least one carboxyl group (B) and at least two hydroxyl groups (A) or hydroxylalkyl substituted hydroxyl groups (A). Such hyperbranched polyesters are condensates of ethoxylated pentaerythritol (four hydroxyl groups (A)) and dimethylolpropionic acid (one carboxyl group (B) and two hydroxyl groups (A)) and commercially available from Perstorp AB as Boltorn®. U.S. Pat. No. 6,225,404, U.S. Pat. No. 6,497,959, U.S. Pat. No. 6,663,966, Int'l. Pat. App. Pub. No. WO 2003/004546, EPO Pat. App. No. 1,424,360 and Int'l. Pat. App. Pub. No. WO 2004/111126 each discloses: 1) the use of such hyperbranched polyesters in thermoplastic resins, and 2) that the addition of hyperbranched polyesters to thermoplastic compositions can result in improved melt rheological properties and in improved mechanical properties of the molded resin because of reduced melt viscosity of the compositions, which can promote its improved processability.

Although the addition of conventional hyperbranched polymers- such as those made by reacting ethoxylated pentaerythritol and dimethylolpropionic acid in the presence of an acidic catalyst-enhances the melt rheology and flowability of thermoplastic polyesters, it also causes a gradual decrease of the molecular weight of the thermoplastic resin. Indeed, the addition of such hyperbranched polymers to polyester compositions brings about a significant decline in mechanical properties upon exposure to heat and humidity exposure, when compared with those properties of compositions lacking such hyperbranched polymers.

There is an increasing need for polyester compositions that exhibit good resistance to humid heat in the solid state, especially for uses in the automotive industry. The conventional practice to increase humid heat resistance in polyesters has been to add an epoxy material. However, when incorporated at the high levels necessitated by current hydrolysis resistance requirements, an epoxy material often increases the melt viscosity of the composition, thereby reducing its flowabiliity.

U.S. Pat. App. Pub. No. 2008/0132631 discloses a composition comprising a polyester, a free triglyceride having at least one acid component and at least one epoxy group, and a hyperbranched polymer such as those disclosed in U.S. Pat. No. 5,418,301. Improvement of the hydrolysis resistance of the composition results from forming an intermediate compound made by the reaction of the polyalkylene terephthalate and the epoxy groups of the free triglyceride. Nevertheless, the so-obtained intermediate compound exhibits an increased melt viscosity, which is mitigated by the addition of the hyperbranched polymer.

There remains a need for thermoplastic compositions that exhibit a good melt rheology and processability while maintaining a good humid heat resistance in the solid state, in terms of retention of mechanical properties upon heat and humidity exposure.

### SUMMARY

Described herein are processes, comprising:
heating in the presence of a mild basic/nucleophilic esterification catalyst a monomer mixture comprising a hyperbranching monomer selected from the group consisting of:
compounds having two COOH groups and one OH group,
compounds having one COOH group and two OH groups,
compounds having one COOH group and three OH groups, and
compounds having three COOH groups and one OH group,
to provide a hyperbranched polymer,
wherein the mild basic/nucleophilic esterification catalyst is selected from tin, titanium, aluminum, antimony, manganese, zinc, and calcium derivatives.

Also described herein are processes of making thermoplastic compositions, comprising:
melt-mixing
   i) 0.05 to 10 weight percent of the hyperbranched polymer;
   ii) one or more thermoplastic polyesters; and
   iii) 1 to 50 weight percent of one or more fillers, to provide a thermoplastic composition,
wherein:
   the weight percent of the hyperbranched polymer, of the one or more thermoplastic polyesters, and of the one or more fillers is based on the total weight of the thermoplastic composition; and
   the thermoplastic composition exhibits an increase in melt viscosity of less than 10 % as measured between 5 minutes and 32 minutes hold up time (HUT) and according to ISO 11443 at 250 °C and at a shear rate of 1000 s⁻¹.

Also described herein are processes of making articles, comprising: molding the thermoplastic compositions described herein to provide an article.

### DETAILED DESCRIPTION

### Definitions

The following definitions are to be used to interpret the meaning of the terms discussed in the description and recited in the claims.

As used herein, the article "a" indicates one as well as more than one and does not necessarily limit its referent noun to the singular.

As used herein, the terms "about" and "at or about" mean that the amount or value in question may be the value designated or some other value about the same. The phrase is intended to convey that similar values promote equivalent results or effects.

As used herein, the term "aging"refers to exposure of a sample to conditions of use at or in excess of 50 hours.

As used herein, the term "basic/nucleophilic esterification catalyst" is described in "Principles of Polymerization" by G. Odian, 2nd. 1981, p.103.

As used herein, the term "hyperbranched polymers" are also known as dendritic polymers, highly branched polymers, dendritic macromolecules or arborescent polymers, which are three dimensional highly branched molecules that have a treelike structure and comprise one or more branching comonomer units. The branching comonomer units comprise branching layers, one or more spacing layers, and/or a layer of chain terminating molecules as well as an optional nucleus, also known as core. Continued replication of the branching layers yields increased branch multiplicity, branch density, and an increased number of terminal functional groups, when compared to other molecules.

Hyperbranched polymers have been developed to act as flow enhancer or rheology modifier in polymeric compositions. They may be prepared via synthetic routes known as A_{z}B_{y}, Aₓ+A_{z}B_{y} and Aₓ+B_{y}., such that Aₓ, A_{z}B_{y} and B_{y} are different monomers and the indices x, y and z are the number of functional groups in A and B respectively, i.e. the functionality of A and B, respectively. Each of the following references discloses the preparation of hyperbranched polymers via different of the above-named routes: namely, U.S. Pat. No. 3,669,939, the A_{z}B_{y} route; U.S. Pat. No. 5,418,301, the Aₓ+A_{z}B_{y} routes; U.S. Pat. App. Pub. No. 2007/0173617, the Aₓ+B_{y} route.

### Hyperbranched polymers

Described herein are processes of making hyperbranched polymers by heating a monomer mixture that comprises a hyperbranching monomer selected from the group consisting of
compounds having one carboxyl (COOH) group and two hydroxyl groups (OH),
compounds having two COOH groups and one OH group,
compounds having one COOH group and three OH groups, and
compounds having three COOH groups and one OH group, in the presence of a mild basic/nucleophilic esterification catalyst selected from group consisting of tin, titanium, aluminum, antimony, manganese, zinc, and calcium derivatives.

The hyperbranched polymers described herein have a number average molecular weight (Mn) not exceeding 30000, preferably in the range of 500 to 20000, more preferably in the range of 500 to 15000, most preferably in the range of 500 to 10000. The molecular weight is controlled by the amount of comonomer, which forms nucleus, core, preferably mono- or poly-alcohol or mono- or poly-epoxide used and overall conversion controlled by the acid number measurement. Unless stated otherwise, "number average molecular weight" and "weight average molecular weight" are determined by gel permeation chromatography (GPC) using a high performance liquid chromatograph (HPLC) supplied by Hewlett-Packard, Palo Alto, Calif. Unless stated otherwise, the liquid phase used was tetrahydrofuran and the standard used was polymethyl methacrylate.

The hyperbranched polymers described herein have hydroxyl groups ranging from 0 to 200 per macromolecule, preferably from 5 to 70, and more preferably from 6 to 50. These hyperbranched polymers have carboxyl groups ranging from 0 to 200 per polymer chain, preferably from 0 to 40, and more preferably from 0 to 20.

The hyperbranched polymers described herein have a glass transition temperature (T_{g}) that ranges from -70°C to 150°C and preferably from -65°C to 100°C, T_{g} being determined by DSC (Differential Scanning Calorimetry) at the heating rate 10 °C/min.

The hyperbranched polymers described herein have preferably an OH number ranging from 0 to 600 mg KOH/g, preferably from 100 to 600 mg KOH/g, OH number being measured by titration with 0.1 N KOH in methanol. The hyperbranched polymer has preferably an acid number ranging from 0 to 600 mg KOH/g, preferably from 0 to 100 mg KOH/g, and more preferably from 0.5 to 15 mg KOH/g, acid number being measured by titration with 0.1 N KOH in methanol.

### Hyperbranching Monomers

As commonly known in the field of polyesterification of monomers, the terms "hydroxyl" and "carboxyl groups" used for the hyperbranching monomers (1), the chain extenders (2) and the molecular weight controlling agents (3) refers to hydroxyl and carboxyl groups as well as their corresponding ester groups. Indeed, it is known that polyesterification can be done by the direct esterification of the hydroxyl and carboxyl groups or by the transesterification involving their corresponding esters, such as for example, methyl/ethyl esters of carboxylic groups and acetates of hydroxyl groups.

The hyperbranching monomers are selected from the group consisting of compounds having one carboxyl (COOH) group and two hydroxyl groups (OH), two COOH groups and one OH group, one COOH groups and three OH groups or three COOH groups and one OH group. The foregoing monomers can be structurally represented by the anyone of the following structures (C), wherein A is carboxyl and B is hydroxyl: 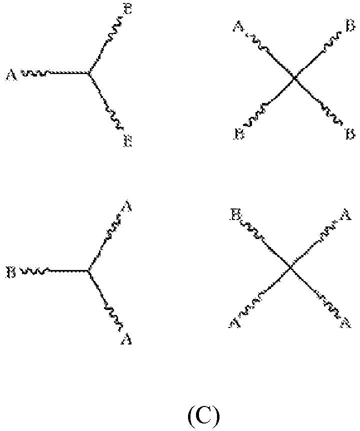 Even though the A and B groups in the foregoing structures are shown in terminal position, these groups may be positioned elsewhere in these structures.

More preferred hyperbranching monomers include dialkylol propionic acid, preferably dimethylol propionic acid and diethylol propionic acid; trimethylolacetic acid; citric acid; malic acid; gluconic acid; and combinations of these; still more preferably, the one or more hyperbranching monomers include dimethylol propionic acid.

When the monomer mixture contains a hyperbranching monomer having two carboxyl groups and one hydroxyl group or having three carboxyl groups and one hydroxyl group, the resulting hyperbranched polymer is further reacted with a monoepoxy, such as ethylene oxide, propylene oxide, epoxy butane, epoxycyclohexane, epoxydecane, and Glydexx® N-10, a mixed glycidyl ester from Exxon Chemicals, Houston, Texas, USA; a diol having one primary hydroxyl and one secondary or tertiary hydroxyl group, such as 2-ethyl, 1,3-hexane diol, 1,3-butane diol, 1,2-propane diol, or a combination of these; or a combination of the monoepoxy and diol to provide the hyperbranched polymer with the described range of hydroxyl groups. It should be understood that by controlling the amount of monoepoxy or diol used for post-reaction, some of the carboxyl groups on the resulting hyperbranched polymer can be left intact, thus providing the hyperbranched polymer with a desired range of carboxyl groups.

Besides the hyperbranched monomers above, the hyperbranched polymers described may also comprise a chain extender selected from the group consisting of hydroxycarboxylic acids, lactones, and mixtures of these; or a molecular weight controlling agent having in the range of 1 to 6 functionalities selected from the group consisting of hydroxyl, amine, epoxide, carboxyl, and mixtures of these; or mixtures of the chain extenders and molecular weight controlling agent..

### Chain extenders

Suitable chain extenders are selected from the group consisting of hydroxycarboxylic acids, lactones, and mixtures of these. Suitable hydroxycarboxylic acids include, but are not limited to, glycolic acid, lactic acid, 3-hydroxycarboxylic acids, e.g., 3-hydroxypropionic acid, 2,2-dimethyl-3-hydroxy-propionic acid (DMHPA), 3-hydroxybutyric acid (HIBA), 3-hydroxyvaleric acid, and hydroxypyvalic acid. Some of the suitable lactones include caprolactone, valerolactone; and lactones of the corresponding hydroxy carboxylic acids, such as, glycolic acid, lactic acid, 3-hydroxycarboxylic acids, e.g., 3-hydroxypropionic acid, 3-hydroxybutyric acid, 3-hydroxyvaleric acid, and hydroxypyvalic acid.

Preferably, the chain extender is a lactone and more preferably, it is caprolactone.

### Molecular weight controlling agents

The molecular weight controlling agents are compound having in the range of 1 to 6 functionalities selected from the group consisting of hydroxyl, amine, epoxide, carboxyl, and mixtures of these.

Suitable molecular weight controlling agents include polyhydric alcohols, such as ethylene glycol, propanediols, butanediols, hexanediols, neopentylglycol, diethylene glycol, cyclohexanediol, cyclohexanedimethanol, trimethylpentanediol, ethylbutylpropanediol, ditrimethylolpropane, trimethylolethane, trimethylolpropane, glycerol, pentaerythritol, dipentaerythritol; polyalkylene glycol, such as, polyethylene glycol and polypropylene glycol. Polyhydric alcohols may also be alkoxylates of polyhydric alcohols. The preferred polyhydric alcohols are ditrimethylolpropane, trimethylolethane, trimethylolpropane and pentaerythritol. Monohydric alcohols, such as, cyclohexanol and 2-ethylhexanol, may be also used.

Suitable molecular weight controlling agents also include epoxides such as, monoepoxides, e.g., ethylene oxide, propylene oxide, epoxy butanes, epoxycyclohexane, epoxydecane, and Glydexx® N-10, a mixed glycidyl ester from Exxon Chemicals, Houston, Tex. Polyepoxies may also be used, such as, glycidyl esters, for example, Araldite®CY-184 from Ciba Specialty Chemicals, Tarrytown, N.Y. Cycloaliphatic epoxides and sorbitol gylcidyl ethers may also be used. Glycidyl ethers of Bisphenol A, glycidyl methacrylate copolymers, epichlorohydrine-polyols and epoxidized polyunsaturated compounds, e.g., epoxidized natural oils and epoxidized polybutadienes, may also be used.

Suitable molecular weight controlling agents also include monoamines, such as butyl amine, hexyl amine, and cyclohexyl amine; polyamines, such as ethylene diamine, hexamethylene diamine, diethylene triamine, and PACM diamine supplied by Airproducts Inc., Allentown, Pa.; and combinations of these.

Suitable molecular weight controlling agents may also include carboxylic acids, such as acetic, hexanoic, adipic, azelaic acids, and combinations of these. The carboxylic acids can have, for example, two carboxyl groups and two hydroxyl groups, such as tartaric acid. Preferably, the one or more chain extenders are one or more polyhydric alcohols and more preferably, pentaerythritol.

### Hyperbranched Monomer, Chain Extender, Molecular Weight Controlling Agent Combinations

When chain extenders and/or molecular weight controlling agents are used with hyperbranching monomers to make the hyperbranched polymers described herein, the chain extenders and/or the molecular weight controlling agents may be used without a solvent or in the presence of an appropriate solvent with removal of water (formed during esterification), by e.g. distillation.

Preferably, the weight ratio of the hyperbranching monomer (1) and the chain extender (2) in the monomer mixture ranges ((1):(2)) from 1:0.2 to 1:20, more preferably from 1:0.3 to 1:10 and still more preferably from 1:0.4 to 1:4. Particularly preferred monomer mixtures comprise (1) the hyperbranching monomer selected from dimethylol propionic acid, diethylol propionic acid, and mixtures of these, with dimethylol propionic acid (DMPA) being preferred; and (2) the chain extender selected from caprolactone, dimethyl-3-hydroxy-propionic acid (DMHPA), hydroxyisobutyric acid (HIBA), and mixtures of these; and/or (3) the molecular weight controlling agent that is a polyhydric alcohol and preferably pentaerythritol.

Preferably, the weight ratio of the hyperbranching monomer (1), the chain extender (2) and the molecular weight controlling agent (3) in the monomer mixture ranges ((1):(2):(3)) from 1:0.2:0.02 to 1:10:0.3, more preferably from 1:0.3:0.03 to 1:5:0.25 and still more preferably from 1:0.4:0.03 to:3:0.2.

### Solvents

Example of appropriate solvents for synthesis of the hyperbranched polymer are high boiling point aprotic solvents and are preferably selected from hydrocarbons, ketones, ethers, and mixtures of these, xylene being preferred. Preferably, heating is carried out a temperature above 150°C.

### Making the Hyperbranched Polymers Described Herein

The hyperbranched polymers described herein are made by heating a monomer mixture that comprises (1) the hyperbranching monomers described above and at least one of the following: (2) a chain extender selected from the group consisting of hydroxycarboxylic acids, lactones, and mixtures of these; and (3) a molecular weight controlling agent having in the range of 1 to 6 functionalities selected from the group consisting of hydroxyl, amine, epoxide, carboxyl, and mixtures of these, such that polymerization of the monomer mixture occurs in one step in the presence of a mild basic/nucleophilic esterification catalyst. Preferably sufficient heating is applied to heat the monomer mixture to at least 150 °C, and more preferably at least 170 °C to about 230 °C.

Alternatively, the hyperbranched polymers can be made in steps by first polymerizing the monomer mixture, which includes the hyperbranching monomer, and then adding a chain extender to continue polymerization.

Alternatively, the hyperbranched polymers can be made by first polymerizing a monomer mixture which contains a molecular weight controlling agent and the hyperbranching monomer and then continuing polymerization by adding a chain extender.

Still another hyperbranching polymer making process includes first polymerizing a monomer mixture that includes the molecular weight controlling agent, the hyperbranching monomer and a portion of chain extender and then continuing polymerization by adding the rest of the chain extender.

Typically, when only a portion of the chain extender is polymerized in the first step, the monomer mixture contains 10 to 90, preferably 20 to 60 and more preferably 30 to 40 weight percent of the chain extender in the first stage with the remainder of the chain extender (2) being added during the second stage.

In yet another alternative, the hyperbranched polymers may be made by first polymerizing the molecular weight controlling agent and a portion of the hyperbranching monomer and a portion of chain extender and t hen polymerizing the remainder of the hyperbranching monomer and chain extender (2). Typically, in this situation, the monomer mixture contains 10 to 90 weight percent, preferably 20 to 60 weight percent and more preferably 30 to 40 weight percent of the chain extender (2), and 10 to 90, preferably 20 to 80 weight percent and more preferably 40 to 60 weight percent of the hyperbranching monomer in the first stage, the remainder of the chain extender and the hyperbranching monomer being added during the second stage.

In still yet another alternative, the hyperbranched polymers may be made by first polymerizing portions of the molecular weight controlling agent, the hyperbranching monomer, and the chain extender followed by polymerizing the remainder of each of these ingredients. Thus, in the first step, the monomer mixture, which includes portions of the hyperbranching monomer (1), chain extender (2) and the molecular weight controlling agent (3), is polymerized and then in the second step, the polymerization is continued with the addition of the remaining portions of the hyperbranching monomer (1), chain extender (2) and the molecular weight controlling agent (3). In this situation, the monomer mixture contains 10 to 90 weight percent, preferably 20 to 60 weight percent and more preferably 30 weight percent, to 40 weight percent of the chain extender (3); contains 10 to 90 weight percent, preferably 20 to 80 weight percent and more preferably 40 to 60 weight percent of the molecular weight controlling agent (3); and 10 to 90 weight percent, preferably 20 to 80 weight percent and more preferably 40 to 60 weight percent of the hyperbranching monomer in the first stage, the remainder of the chain extender and the hyperbranching monomer being added during the second stage.

### Basic/Nucleophilic Esterification Catalysts

The term "basic/nucleophilic esterification catalyst" is described in "Principles of Polymerization" by G. Odian, 2nd. 1981, p.103, wherein basic/nucleophilic esterification catalysts based on tin, titanium, aluminum, antimony, manganese, zinc, and calcium derivative are said to be useful for esterification at high temperature to minimize undesired side reactions.

Examples of tin, titanium, aluminum, antimony, manganese, zinc, calcium derivatives include without limitation carboxylates, alkoxides, oxide, organometalics, and mixtures of these. More preferably the basic/nucleophilic esterification catalyst is tin (II) di(2-ethylhexanoate) (Sn(O₂CC₇H₁₅)₂. Preferably, the catalyst is added in an amount from 0.001 to 1 weight percent, 0.01 to 1 weight percent, or 0.1 to 1 weight percent, the weight percent being based on the total weight of the monomer mixture.

### Thermoplastic Compositions

Described herein are processes of making thermoplastic compositions having good melt rheological properties, the processes comprising melt-mixing i) the hyperbranched polymers described herein; ii) one or more thermoplastic polyesters; and iii) one or more fillers, preferably glass..

The inventors have surprisingly found that melt-mixing the hyperbranched polymers described herein with one or more thermoplastic polymers result in thermoplastic compositions that have a relatively low change in melt viscosity and a relatively good humid heat resistance in the solid state upon heat and humidity exposure, when compared with thermoplastic compositions comprising a hyperbranched polymer made by heating a monomer mixture in the presence of an acid catalyst.

To the point, it is because of the addition of the hyperbranched polymers described herein that these thermoplastic compositions have a relatively low change in melt viscosity and good humid heat resistance in the solid state upon heat and humidity exposure when compared with the same thermoplastic compositions comprising a conventional hyperbranched polymer made by heating a monomer mixture in the presence of an acid catalyst.

The thermoplastic compositions described herein comprise one or more thermoplastic polyesters and one or more hyperbranched polymers described herein. Preferably, the one or more thermoplastic polyesters are present in an amount from at or about 50 to at or about 99.99 weight percent more preferably, in an amount from at or about 90 to at or about 99.95 weight percent, and still more preferably in an amount from at or about 95 to at or about 99.9 weight percent; the weight percent being based on the total weight of the one or more thermoplastic polyesters and the hyperbranched polymer.

The hyperbranched polymers described above are also known as highly branched polyester polyols. Preferably, the hyperbranched polymer is present in an amount from at or about 0.01 to at or about 50 weight percent, more preferably, in an amount from at or about 0.05 to at or about 10 weight percent, and still more preferably in an amount from at or about 0.1 to at or about 5 weight percent; the weight percent being based on the total weight of the one or more thermoplastic polyesters and the hyperbranched polymer.

### Thermoplastic Polyesters

Thermoplastic polyesters are typically derived from one or more dicarboxylic acids and diols. Herein the term "dicarboxylic acid" also refers to dicarboxylic acid derivatives such as esters. In preferred polyesters the dicarboxylic acids comprise one or more of terephthalic acid, isophthalic acid, and 2,6-naphthalene dicarboxylic acid, and the diol component comprises one or more of HO(CH₂)ₙOH (I); 1,4-cyclohexanedimethanol; HO(CH₂CH₂O)ₘCH₂CH₂OH (II); and HO(CH₂CH₂CH₂CH₂O)_{z}CH₂CH₂CH₂CH₂OH (III), wherein n is an integer of 2 to 10, m on average is 1 to 4, and z is on average about 1 to about 40. Note that (II) and (III) may be a mixture of compounds in which m and z, respectively, may vary and that since m and z are averages, they do not have to be integers. Other suitable dicarboxylic acids include sebacic and adipic acids. Hydroxycarboxylic acids such as hydroxybenzoic acid may be used as comonomers.

Suitable thermoplastic polyesters include without limitation poly(ethylene terephthalate) (PET), poly(trimethylene terephthalate) (PTT), poly(1,4-butylene terephthalate) (PBT), poly(ethylene 2,6-naphthoate) (PEN), and poly(1,4-cyclohexyldimethylene terephthalate) (PCT) and copolymers and blends of the same. Of these, the preferred thermoplastic polyesters are selected from poly(ethylene terephthalate) (PET), poly(trimethylene terephthalate) (PTT), poly(1,4-butylene terephthalate) (PBT), poly(1,4-cyclohexyldimethylene terephthalate) (PCT), copolyester thermoplastic elastomers (TPCs) and copolymers and blends of the same.

### Copolyester Thermoplastic Elastomers

Copolyester thermoplastic elastomers (TPCs) such as copolyetheresters or copolyesteresters are copolymers that have a multiplicity of recurring long-chain ester units and short-chain ester units joined head-to-tail through ester linkages, said long-chain ester units being represented by formula (A): 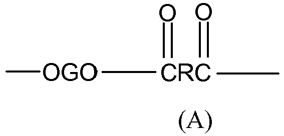 and said short-chain ester units being represented by formula (B): 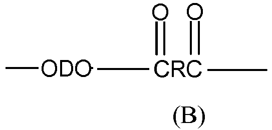 wherein
G is a divalent radical remaining after the removal of terminal hydroxyl groups from poly(alkylene oxide)glycols having a number average molecular weight of between about 400 and about 6000, or preferably between about 400 and about 3000;
R is a divalent radical remaining after removal of carboxyl groups from a dicarboxylic acid having a molecular weight of less than about 300;
D is a divalent radical remaining after removal of hydroxyl groups from a diol having a molecular weight less than about 250.

As used herein, the term "long-chain ester units" as applied to units in a polymer chain refers to the reaction product of a long-chain glycol with a dicarboxylic acid. Suitable long-chain glycols are poly(alkylene oxide) glycols having terminal (or as nearly terminal as possible) hydroxy groups and having a number average molecular weight of from about 400 to about 6000, and preferably from about 600 to about 3000. Preferred poly(alkylene oxide) glycols include poly(tetramethylene oxide) glycol, poly(trimethylene oxide) glycol, poly(propylene oxide) glycol, poly(ethylene oxide) glycol, copolymer glycols of these alkylene oxides, and block copolymers such as ethylene oxide-capped poly(propylene oxide) glycol. Mixtures of two or more of these glycols can be used.

As used herein, the term "short-chain ester units" as applied to units in a polymer chain of the copolyetheresters refers to low molecular weight compounds or polymer chain units having molecular weights less than about 550. They are made by reacting a low molecular weight diol or a mixture of diols (molecular weight below about 250) with a dicarboxylic acid to form ester units represented by Formula (B) above. Included among the low molecular weight diols which react to form short-chain ester units suitable for use for preparing copolyetheresters are acyclic, alicyclic and aromatic dihydroxy compounds.

Preferred compounds are diols with about 2-15 carbon atoms such as ethylene, propylene, isobutylene, tetramethylene, 1,4-pentamethylene, 2,2-dimethyltrimethylene, hexamethylene and decamethylene glycols, dihydroxycyclohexane, cyclohexane dimethanol, resorcinol, hydroquinone, 1,5-dihydroxynaphthalene, etc. Especially preferred diols are aliphatic diols containing 2-8 carbon atoms, and a more preferred diol is 1,4-butanediol. Included among the bisphenols which can be used are bis(*p*-hydroxy)diphenyl, bis(*p*-hydroxyphenyl)methane, and bis(*p*-hydroxyphenyl)propane. Equivalent ester-forming derivatives of diols are also useful (e.g., ethylene oxide or ethylene carbonate can be used in place of ethylene glycol or resorcinol diacetate can be used in place of resorcinol).

As used herein, the term "diols" includes equivalent ester-forming derivatives such as those mentioned. However, any molecular weight requirements refer to the corresponding diols, not their derivatives. Dicarboxylic acids that can react with the foregoing long-chain glycols and low molecular weight diols to produce the copolyetheresters are aliphatic, cycloaliphatic or aromatic dicarboxylic acids of a low molecular weight, i.e., having a molecular weight of less than about 300. The term "dicarboxylic acids" as used herein includes functional equivalents of dicarboxylic acids that have two carboxyl functional groups that perform substantially like dicarboxylic acids in reaction with glycols and diols in forming copolyetherester polymers. These equivalents include esters and ester-forming derivatives such as acid halides and anhydrides. The molecular weight requirement pertains to the acid and not to its equivalent ester or ester-forming derivative.

Thus, an ester of a dicarboxylic acid having a molecular weight greater than 300 or a functional equivalent of a dicarboxylic acid having a molecular weight greater than 300 are included provided the corresponding acid has a molecular weight below about 300. The dicarboxylic acids can contain any substituent groups or combinations that do not substantially interfere with the copolyetherester polymer formation and use of the polymer in these thermoplastic compositions.

As used herein, the term "aliphatic dicarboxylic acids" refers to carboxylic acids having two carboxyl groups each attached to a saturated carbon atom. If the carbon atom to which the carboxyl group is attached is saturated and is in a ring, the acid is cycloaliphatic. Aliphatic or cycloaliphatic acids having conjugated unsaturation often cannot be used because of homopolymerization. However, some unsaturated acids, such as maleic acid, can be used.

As used herein, the term "aromatic dicarboxylic acids" refer to dicarboxylic acids having two carboxyl groups each attached to a carbon atom in a carbocyclic aromatic ring structure. It is not necessary that both functional carboxyl groups be attached to the same aromatic ring and where more than one ring is present, they can be joined by aliphatic or aromatic divalent radicals or divalent radicals such as -O- or -SO₂-. Representative useful aliphatic and cycloaliphatic acids that can be used include sebacic acid; 1,3-cyclohexane dicarboxylic acid; 1,4-cyclohexane dicarboxylic acid; adipic acid; glutaric acid; 4-cyclohexane-1,2-dicarboxylic acid; 2-ethylsuberic acid; cyclopentanedicarboxylic acid decahydro-1,5-naphthylene dicarboxylic acid; 4,4'-bicyclohexyl dicarboxylic acid; decahydro-2,6-naphthylene dicarboxylic acid; 4,4'-methylenebis(cyclohexyl) carboxylic acid; and 3,4-furan dicarboxylic acid. Preferred acids are cyclohexane-dicarboxylic acids and adipic acid.

Representative aromatic dicarboxylic acids include phthalic, terephthalic and isophthalic acids; bibenzoic acid; substituted dicarboxy compounds with two benzene nuclei such as bis(p-carboxyphenyl)methane; *p*-oxy-1,5-naphthalene dicarboxylic acid; 2,6-naphthalene dicarboxylic acid; 2,7-naphthalene dicarboxylic acid; 4,4'-sulfonyl dibenzoic acid and C₁-C₁₂ alkyl and ring substitution derivatives of these, such as halo, alkoxy, and aryl derivatives. Hydroxyl acids such as *p*-(beta-hydroxyethoxy)benzoic acid can also be used provided an aromatic dicarboxylic acid is also used.

Aromatic dicarboxylic acids are preferred for preparing suitable copolyetherester elastomers. Among the aromatic acids, those with 8-16 carbon atoms are preferred, particularly terephthalic acid alone or with a mixture of phthalic and/or isophthalic acids.

The copolyetherester elastomer preferably comprises from at or about 15 to at or about 99 weight percent short-chain ester units corresponding to Formula (B) above, the remainder being long-chain ester units corresponding to Formula (A) above. More preferably, the copolyetherester elastomer comprise from at or about 20 to at or about 95 weight percent, and even more preferably from at or about 50 to at or about 90 weight percent short-chain ester units, where the remainder is long-chain ester units. More preferably, at least about 70% of the groups represented by R in Formulae (A) and (B) above are 1,4-phenylene radicals and at least about 70% of the groups represented by D in Formula (B) above are 1,4-butylene radicals and the sum of the percentages of R groups which are not 1,4-phenylene radicals and D groups that are not 1,4-butylene radicals does not exceed 30%. If a second dicarboxylic acid is used, isophthalic acid is preferred and if a second low molecular weight diol is used, ethylene glycol, 1,3-propanediol, cyclohexanedimethanol, or hexamethylene glycol are preferred.

### Styrenic-based copolymers

To reduce warpage in the finished part, one or more of the thermoplastic polyesters may be replaced by one or more styrenic-based copolymers, which may be grafted with acrylates or with butadienes. Examples of styrenic-based copolymers include without limitation styrene acrylonitrile copolymers (SAN), acrylonitrile butadiene styrenes (ABS) and acryl nitril styrene copolymers (ASA). When present, the one or more styrenic-based copolymers are preferably up to 40 weight percent of the sum of the thermoplastic polyesters and the styrenic-based copolymers.

### Other Components of the Thermoplastic Compositions

### Fillers

The thermoplastic compositions described herein may further comprise one or more fillers. Preferably, the one or more fillers are selected from calcium carbonate, glass fibers, glass flakes, carbon fibers, talc, mica, wollastonite, calcinated clay, kaolin, magnesium sulfate, magnesium silicate, barium sulphate, titanium dioxide, sodium aluminum carbonate, barium ferrite, potassium titanate, and mixtures of these. When present, the one or more fillers are preferably from 1 to 50 weight percent, more preferably from 1 to 40 weight percent, and even more preferably from 1 to at or about 35 weight percent of the total weight of the thermoplastic composition.

### Flame retardants

The thermoplastic composition described herein may further comprise one or more flame retardants, also referred to as flame proofing agents. Flame retardants in thermoplastic compositions to suppress, reduce, delay or modify the propagation of a flame through the compositions or articles made from them. The one or more flame retardants may be halogenated flame retardants inorganic flame retardants, phosphorous containing compounds and nitrogen containing compounds, and combinations of these. When present, the one or more flame retardants comprise from 5 to 30 weight percent, or preferably from at or about 10 to at or about 25 weight percent of the total weight of the thermoplastic composition.

Halogenated organic flame retardants include without limitation chlorine- and bromine-containing compounds. Examples of suitable chlorine-containing compounds include without limitation chlorinated hydrocarbons, chlorinated cycloaliphatic compounds, chlorinated alkyl phosphates, chlorinated phosphate esters, chlorinated polyphosphates, chlorinated organic phosphonates, chloroalkyl phosphates, polychlorinated biphenyls and chlorinated paraffins. Examples of suitable bromine-containing compounds include without limitation tetrabromobisphenol A, bis(tribromophenoxy) alkanes, polybromodiphenyl ethers, brominated phosphate esters tribromophenol, tetrabromodiphenyl sulfides, polypentabromo benzyl acrylate, brominated phenoxy resins, brominated polycarbonate polymeric additives based on tetrabromobisphenol A, brominated epoxy polymeric additives based on tetrabromobisphenol A and brominated polystyrenes.

Inorganic flame retardants include without limitation metal hydroxides, metal oxides, antimony compounds, molybdenum compounds and boron compounds. Examples of suitable metal hydroxides include without limitation magnesium hydroxide, aluminum hydroxide, aluminum trihydroxide and other metal hydroxides. Examples of suitable metal oxides include without limitation zinc and magnesium oxides. Examples of suitable antimony compounds include without limitation antimony trioxide, sodium antimonite and antimony pentoxide. Examples of suitable molybdenum compounds include without limitation molybdenum trioxide and ammonium octamolybdate (AOM). Examples of suitable boron compounds include without limitation include zinc borate, borax (sodium borate), ammonium borate and calcium borate.

Examples of suitable phosphorous containing compounds include without limitation red phosphorus; halogenated phosphates; triphenyl phosphates; oligomeric and polymeric phosphates; phosphonates phosphinates, disphosphinate and/or polymers of these.

Examples of suitable nitrogen containing compounds include without limitation triazines or derivatives of these, guanidines or derivatives of these, cyanurates or derivatives of these and isocyanurates or derivatives of these.

Preferably, the one or more flame retardants are phosphorous containing compounds and more preferably are flame retardants comprising a phosphinate of the formula (I) and/or a disphosphinate of the formula (II) and/or polymers of (I) and/or (II), 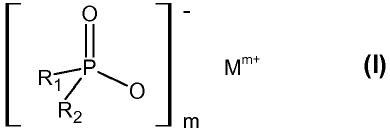 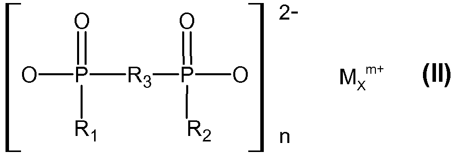 wherein R₁ and R₂ are identical or different and are hydrogen, C₁ -C₆ alkyl, linear, or branched, and/or aryl; R₃ is C₁-C₁₀-alkylene, linear, or branched, C₆-C₁₀-arylene, -alkylarylene or -arylalkylene; M is calcium, magnesium, aluminum, and/or zinc; m is 2 to 3; n is 1 or 3; and x is 1 or 2.

R₁ and R₂ may be identical or different and are preferably hydrogen, methyl, ethyl, n-propyl, isopropyl, n-butyl, tert-butyl, n-pentyl and/or phenyl. R₃ is preferably methylene, ethylene, n-propylene, isopropylene, n-butylene, tert-butylene, n-pentylene, n-octylene, n-dodecylene, or phenylene or naphthylene, or methylphenylene, ethylphenylene, tert-butylphenylene, methylnaphthylene, ethylnaphthylene or tert-butylnaphthylene, or phenylmethylene, phenylethylene, phenylpropylene or phenylbutylene.

Combinations of phosphinates of the formula (I) and/or disphosphinates of the formula (II) and/or polymers of (I) and/or (II) with one or more synergists may be used. Examples of synergist include without limitation compounds of nitrogen such as for example benzoguanamine, tris(hydroxyethyl) isocyanurate, allantoin, glycoluril, melamine, melamine cyanurate, dicyandiamide, guanidine and carbodiimides; compounds phosphorus or compounds of phosphorus and nitrogen such as for example condensation products of melamine (e.g. melem, melam, melon and/or more highly condensation compounds of these), reaction products of melamine with phosphoric acid (melamine pyrophosphate, dimelamine pyrophosphate, melamine polyphosphate, melem polyphosphate, melam polyphosphate and/or mixed polysalts of this type). The use of phosphinates of the formula (I) and/or disphosphinates of the formula (II) and/or polymers of (I) and/or (II) optionally with one or more synergists in polyester compositions is described in European Pat. No. 0,699,708, which is hereby incorporated by reference herein.

### Heat stabilizers

The thermoplastic compositions described herein may further comprise one or more heat stabilizers, which may be selected from hindered phenol antioxidants, hindered amine antioxidants, phosphorus antioxidants (e.g. phosphite or phosphonite stabilizers), aromatic amine stabilizers, thioesters, phenolic based anti-oxidants, and mixtures of these. When present, the one or more heat stabilizers are present in an amount from 0.1 to 5 weight percent, or preferably from 0.1 to 3 weight percent, or more preferably from 0.1 to 1 weight percent of the total weight of the thermoplastic composition.

### Epoxy-containing compounds

Depending on the hydrolysis resistance requirements of the thermoplastic compositions described herein, the thermoplastic compositions may further comprise one or more epoxy-containing compounds. Examples of suitable epoxy-containing compounds include without limitation an epoxy containing polyolefin, a glycidyl ether of polyphenols, bisphenol epoxy resin and an epoxy novolac resin. Epoxy containing polyolefins are polyolefins, preferably polyethylene, that are functionalized with epoxy groups; by "functionalized", it is meant that the groups are grafted and/or copolymerized with organic functionalities. Examples of epoxides used to functionalize polyolefins are unsaturated epoxides comprising from four to eleven carbon atoms, such as glycidyl (meth)acrylate, allyl glycidyl ether, vinyl glycidyl ether and glycidyl itaconate, glycidyl (meth)acrylates (GMA) being particularly preferred. Ethylene/glycidyl (meth)acrylate copolymers may further contain copolymerized units of an alkyl (meth)acrylate having from one to six carbon atoms and an α-olefin having 1-8 carbon atoms. Representative alkyl (meth)acrylates include methyl (meth)acrylate, ethyl (meth)acrylate, propyl (meth)acrylate, butyl (meth)acrylate, isobutyl (meth)acrylate, hexyl (meth)acrylate, and combinations of these. Of note are ethyl acrylate and butyl acrylate. Bisphenol epoxy resins are condensation products having epoxy functional groups and a bisphenol moiety. Examples include without limitation products obtained from the condensation of bisphenol A and epichlorohydrin and products obtained from the condensation of bisphenol F and epichlorohydrin. Epoxy novolac resins are condensation products of an aldehyde such as for example formaldehyde and an aromatic hydroxyl-containing compound such as for example phenol or cresol. When present, the one or more epoxy-containing compounds are present in an amount sufficient to provide from at or about 3 to at or about 300 milliequivalents of total epoxy function per kilogram of polyester, preferably from at or about 5 to at or about 300 milliequivalents of total epoxy function per kilogram of polyester.

### Ultraviolet light stabilizers

The thermoplastic composition described herein may further comprise ultraviolet light stabilizers such as hindered amine light stabilizers (HALS), carbon black, substituted resorcinols, salicylates, benzotriazoles, and benzophenones.

### Other Additives

The thermoplastic composition described herein may further comprise additives that include, but are not limited to, one or more of the following components as well as combinations of these: lubricants, impact modifiers, flow enhancing additives, antistatic agents, coloring agents, nucleating agents, crystallization promoting agents and other processing aids known in the polymer compounding art.

Fillers, modifiers and other ingredients described herein may be present in the thermoplastic composition in amounts and in forms well known in the art, including in the form of so-called nano-materials where at least one of the dimensions of the particles is in the range of 1 to 1000 nm.

### Making The Thermoplastic Compositions Described Herein

Methods for making the thermoplastic composition described herein comprise melt-mixing the one or more thermoplastic polyesters described herein, the hyperbranched polymers described herein and optionally any fillers, modifiers and other ingredients described herein.

The thermoplastic compositions described herein are melt-mixed blends, in which all of the polymeric components are well-dispersed within each other and all of the non-polymeric ingredients are well-dispersed in and bound by the polymer matrix, such that the blend forms a unified whole. Any melt-mixing method may be used to combine the polymeric components and non-polymeric ingredients of the thermoplastic compositions described herein. Preferably, the thermoplastic compositions described herein have less than 0.3 mmoles of any protonic/Bronstedt acid per kilogram of the one or more thermoplastic polyesters, the quantity of acid being determined by conventional methods such as for example NMR or potentiometry.

For example, the polymeric components and non-polymeric ingredients may be added to a melt mixer, such as, for example, a single or twin-screw extruder; a blender; a single or twin-screw kneader; or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained. When long fillers such as for example long glass fibers are used in the composition, pultrusion may be used to prepare a reinforced composition.

Also described herein are methods of making an article comprising a step of molding the thermoplastic compositions described herein to provide a shaped article. Providing a shaped article can be done by any shaping technique, such as for example extrusion or injection molding, injection molding being preferred.

The thermoplastic compositions described herein exhibit an increase in melt viscosity of less than 10 % as measured between 5 minutes and 32 minutes hold up time (HUT) and according to ISO 11443 at 250 °C and at a shear rate of 1000 s⁻¹. The change in melt viscosity is expressed by the percent melt viscosity retention at 32 minutes/5 minutes times 100.

### Articles

Examples of shaped articles made of the thermoplastic composition described herein include without limitation components for automotive applications; household appliance parts and furniture; recreation and sport parts; electrical/electronic parts such as for example connectors and housings; power equipment; and buildings or mechanical devices.

### EXAMPLES

The Examples below provide greater detail for the compositions, uses and processes described herein.

### Materials

The following materials were used to make the thermoplastic compositions described herein and the comparative examples.

PBT 2 : (Crastin® 6131) poly(1,4-butylene terephthalate) having a melt flow rate (MFR) from 41 to 55 g/10 min (measured according to ISO1133, 250°C, 2.16 kg). Such a product is commercially available from E.I. DuPont de Nemours and Company, Wilmington, Delaware, USA under the trademark Crastin®.

Phenolic antioxidant: pentaerythritol Tetrakis(3-(3,5-di-tert-butyl-4-hydroxyphenyl)propionate), refers to Irganox® 1010 supplied by Ciba Specialty Chemicals, Tarrytown, New York, USA.
Lubricant: oxidized polyethylene wax, refers to Vestowax® AO1535 supplied by Evonik Degussa GmbH, Düsseldorf, Germany.
Glass fiber 1: 4.5 mm length chopped glass fibers, refers to ECS303H available from Chongqing Polycomp International Corp.
Glass fiber 2 : 4.5 mm length chopped glass fibers, refers to Vetrotex® 952 available from OCV Reinforcements.

Hyperbranched polymer 1: Hyperbranched polymer made with an acid catalyst.
A highly branched polyester polyol composed of ethoxylated pentaerythritol (EO-PTL) and dimethylolpropionic acid (DMPA). Such hyperbranched polymer which is commercially available from Perstorp Specialty Chemicals, Sweden under the trademark Boltorn® H20 is said to be characterized by having 16 terminal hydroxyl groups, a number average molecular weight (Mn) of 1747, a weight average molecular weight (Mw) of 2100, a hydroxyl number of 490-530 mg KOH/g, an acid number of less than or equal to 9 mg KOH/g and a T_{g} of 30°C. By ¹H-NMR characterization, such hyperbranched polymer comprised 0.21 weight percent of free p-toluenesulfonic acid (PSA) catalyst and 0.50 weight percent of p-toluenesulfonic acid that is covalently bound to the hydroxyl functions of the hyperbranched polymer.

Hyperbranched Polymer 5: Hyperbranched polymer made with a mild basic/nucleophilic esterification catalyst.
This highly branched polyester polyol was obtained by heating a monomer mixture of dimethylolpropionic acid (DMPA) as hyperbranching monomer, γ-caprolactone (CPL) as chain extender and pentaerythritol (PTL) as molecular weight controlling agent and organotin as catalyst.
The following reagents were charged into a 3L flask equipped with a mechanical stirrer, thermocouple, water condenser and decanter under nitrogen flow: pentaerythritol (130.1 g, 0.956 mole), dimethylolpropionic acid (751.1 g, 5.60 mole), γ-caprolactone (750.6 g, 6.58 mole), dibutyltin dilaurate (2.05 g, 0.00325 mole) and heated at 180°C for 2 hours, and then temperature was raised to 190°C. The reaction progress was monitored by the acid number measurement and the water volume collected. After 10 hours, 87 mL water was collected, 0.53 g sample was withdrawn and dissolved in 10 mL DMSO, and the acid number (25.0) was determined by titration with 0.1 N KOH in methanol. After 12 hours 20 ml xylenes were added. After 19 hours 0.58 g sample was withdrawn and dissolved in 10 mL DMSO, and the acid number (1.71) was determined by titration with 0.1 N KOH in methanol. After 21 hours the hot, viscous, clear polymer (1,488.1 g) was poured out of the reactor to a glass jar. Such hyperbranched polymer was characterized by having a number average molecular weight (Mn) of 1,551, a weight average molecular weight (Mw) of 6,836, a Mw/Mn ratio of 4.41 as determined by SEC with triple LS viscosity and RI detectors in THF, a hydroxyl number of 350 mg KOH/g, an acid number of 1.1 mg KOH/g and a Tg of -30 °C.

### Hyperbranched Polymer 6:

Hyperbranched polymer made with a mild basic/nucleophilic esterification catalyst.

This highly branched polyester polyol was obtained by heating a monomer mixture of dimethylolpropionic acid (DMPA) as hyperbranching monomer, - caprolactone (CPL) as chain extender and pentaerythritol (PTL) as molecular weight controlling agent and organotin as catalyst.

The following reagents were charged into a 3L flask equipped with a mechanical stirrer, thermocouple, water condenser and decanter under nitrogen flow: pentaerythritol (170.2 g, 1.251 mole), dimethylolpropionic acid (750.3 g, 5.60 mole), γ-caprolactone (750.4 g, 6.58 mole), dibutyltin dilaurate (2.05 g, 0.00325 mole) and heated at 180°C for 3 hours, and then temperature was raised to 190°C. The reaction progress was monitored by the acid number measurement and the water volume collected. After 11 hours, 94 mL water was collected, 0.89 g sample was withdrawn and dissolved in 10 mL DMSO, and the acid number (18.9) was determined by titration with 0.1 N KOH in methanol. After 13 hours 20 ml xylenes were added. After 19 hours 1.09 g sample was withdrawn and dissolved in 10 mL DMSO, and the acid number (1.27) was determined by titration with 0.1 N KOH in methanol. After 20.5 hours the hot, viscous, clear polymer (1,526.3 g) was poured out of the reactor to a glass jar. Such hyperbranched polymer was characterized by having a number average molecular weight (Mn) of 1,019, a weight average molecular weight (Mw) of 4,121, a Mw/Mn ratio of 4.04 as determined by SEC with triple LS viscosity and RI detectors in THF, a hydroxyl number of 400 mg KOH/g, an acid number of 1.0 mg KOH/g and a Tg of -28 °C.

In the Tables, Compositions of the Examples are identified as "E" and Compositions of the Comparative Examples as "C". Tables X and Y detail Compositions E and the Comparative Examples C.

### Measurements

The thermoplastic compositions of the Examples and the Comparative Examples were prepared by melt blending the ingredients shown in Tables X and Y in a twin screw extruder operating at about 250°C using a screw speed of about 250 rpm and torque of about 90%. Ingredient quantities shown in Tables X and Y are given in weight percent of the total weight of the thermoplastic composition.

The compounded mixture was extruded in the form of laces or strands, cooled in a water bath, chopped into granules and placed into sealed aluminum lined bags in order to prevent moisture pick up. The cooling and cutting conditions were adjusted to ensure materials were kept below 0.04 percent of moisture level.

### Rheology properties

Prior to melt viscosity measurement, the granules of the thermoplastic composition were dried at 120°C for 4 hours in a vacuum dryer to have a moisture level below 0.02 percent. Melt viscosity was determined according to ISO 11443 at a shear rate of 1000 s⁻¹ and 250°C and was measured after 5 to 7 minutes and at consecutive 5 to 6 minute intervals thereafter (= hold up time (HUT)) after the composition had been introduced into the rheometer barrel.

### Mechanical properties

Prior to injection molding, the granules of the thermoplastic composition were dried to have a moisture level below 0.04 percent. Tensile strength was measured according to ISO 527-2/5A/50. Measurements were made on injection molded ISO tensile bar 5A samples (barrel temperature = 250°C; mold temperature = 80°C and a hold pressure of 60 MPa) with a thickness of the test specimen of 2 mm and a width of 4 mm according to ISO 527. The test specimens were heat aged in steam in a pressure vessel at a temperature of 121 °C and a pressure of 2 atm.

At various heat aging times, the test specimens were removed from the pressure vessel and allowed to cool to room temperature. The tensile mechanical properties, i.e. the tensile strength as defined in ISO 527-1 section 4.3.3 as the maximum tensile stress sustained by the test specimen during a tensile test, were then measured according to ISO 527 using a Zwick tensile instrument.

The average values of tensile strength obtained from 5 specimens are given in Tables X and Y. The retention of tensile strength corresponds to the percentage of tensile strength after heat aging at 121 °C, 100 percent relative humidity and 2 atm for the indicated number of hours relative to that of specimens prior to heat and humidity exposure, which is considered 100 percent. Retention results are given in Tables X and Y.

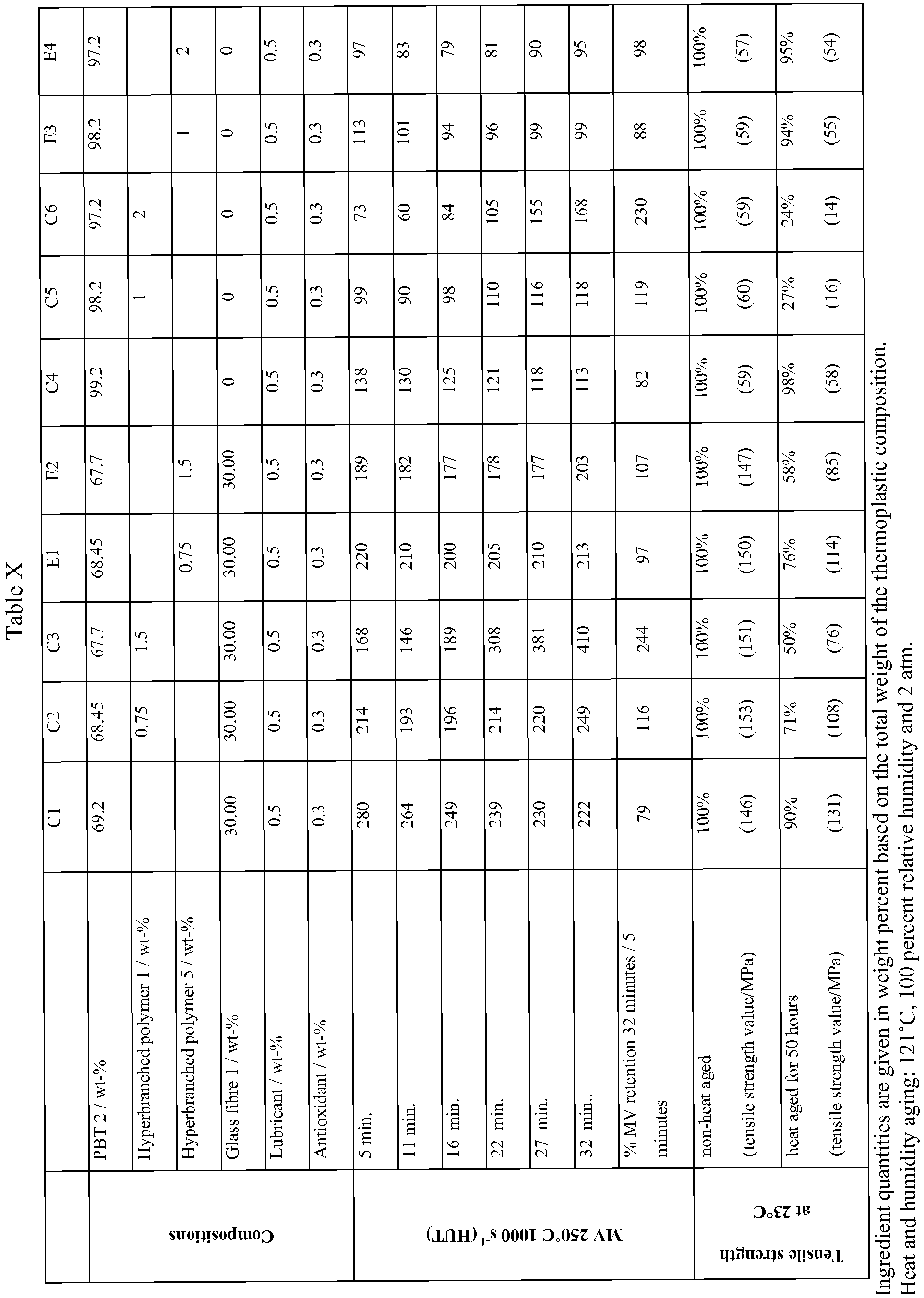

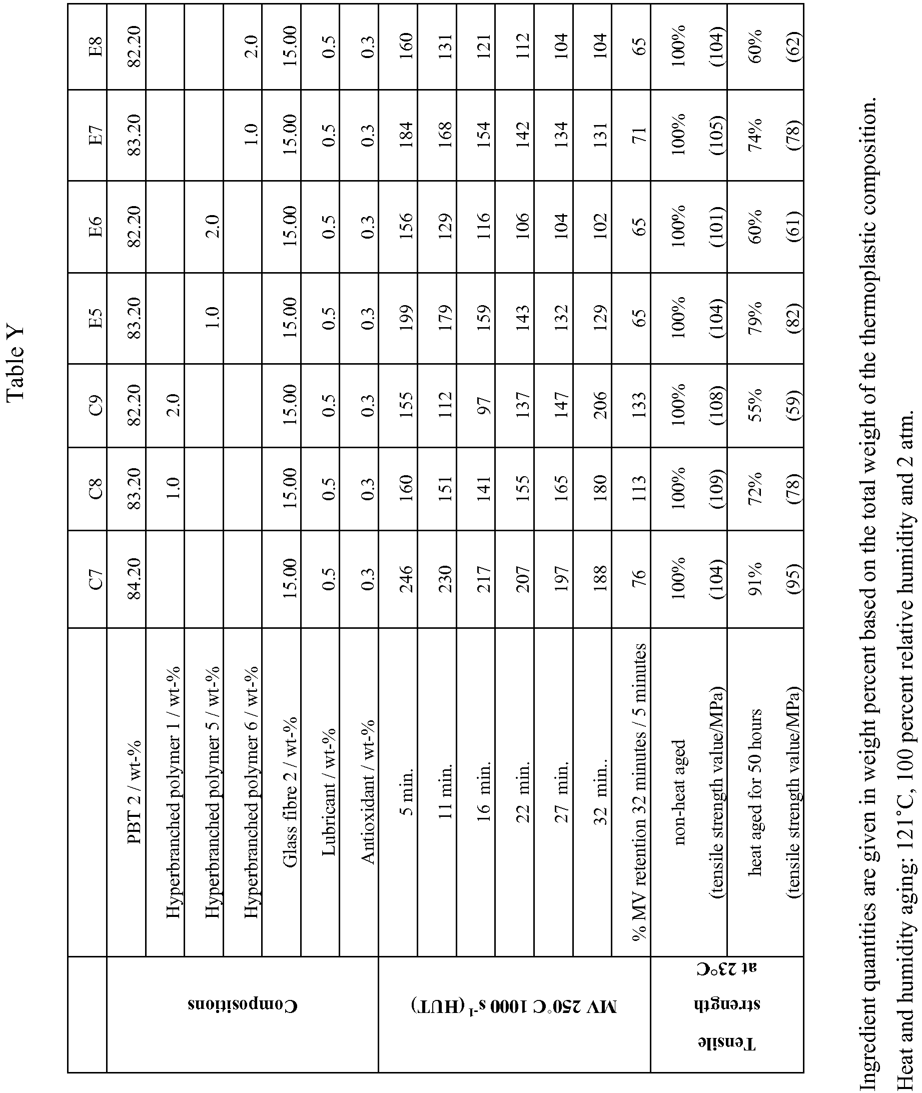

## Claims

1. A process, comprising:
heating in the presence of a mild basic/nucleophilic esterification catalyst
a monomer mixture comprising a hyperbranching monomer selected from the group consisting of:
compounds having two COOH groups and one OH group,
compounds having one COOH group and two OH groups,
compounds having one COOH group and three OH groups, and
compounds having three COOH groups and one OH group;
to provide a hyperbranched polymer,
wherein the mild basic/nucleophilic esterification catalyst is selected from carboxylates, alkoxides, oxides, and organometallics of tin, titanium, aluminum, antimony, manganese, zinc, and calcium and mixtures of these;
the process comprising:
melt-mixing:
i) 0.05 to 10 weight percent of a hyperbranched polymer,
ii) one or more thermoplastic polyesters; and
iii) 1 to 50 weight percent of one or more fillers, to provide a thermoplastic composition, wherein:
the weight percent of the hyperbranched polymer, of the one or more thermoplastic polyesters, and of the one or more fillers is based on the total weight of the thermoplastic composition; and
the thermoplastic composition exhibits an increase in melt viscosity of less than 10 % as measured between 5 minutes and 32 minutes hold up time (HUT) and according to ISO 11443 at 250 °C and at a shear rate of 1000 s⁻¹.

2. The process of claim 1, wherein the hyperbranched polymer is from 0.1 to 5 weight percent of the total weight of the one or more thermoplastic polyesters and the hyperbranched polymer.

3. The process of claim 1, wherein the hyperbranched polymer has a number average molecular weight determined by gel permeation chromatography in the range of 500 to 20000.

4. The process of claim 1, wherein the one or more thermoplastic polyesters are selected from poly(ethylene terephthalate), poly(trimethylene terephthalate), poly(1,4-butylene terephthalate), poly(ethylene 2,6-naphthoate), and poly(1,4-cyclohexyldimethylene terephthalate), copolyester thermoplastic elastomers, and mixtures of these.

5. The process of claim 1, wherein the one or more thermoplastic polyesters comprises 30 to 89.9 weight percent of the thermoplastic composition of poly(1,4-butylene terephthalate).

6. The process of claim 1, wherein at least one of the one or more thermoplastic polyesters is replaced by one or more styrenic-based copolymers.

7. The process of claim 1, wherein the filler is glass, preferably having at least 0.1 weight percent organic sizing.

8. The process of claim 1, wherein the monomer mixture further comprises a component selected from the group consisting of:
a) a chain extender selected from the group consisting of hydroxycarboxylic acids, lactones, and mixtures of these;
b) a molecular weight controlling agent having in the range of 1 to 6 functionalities and selected from the group consisting of hydroxyl, amine, epoxide, carboxyl, and mixtures of these; and
c) mixtures of a) and b).

9. The process of claim 8, wherein:
the hyperbranching monomer is dimethylolpropionic acid;
the chain extender is selected from caprolactone, 2,2-dimethyl-3-hydroxy-propionic acid, hydroxyisobutyric acid, and mixtures of these; and
the molecular weight controlling agent is pentaerythritol.

10. The process of claim 1, wherein:
the hyperbranching monomer is dimethylolpropionic acid; and
the chain extender is selected from caprolactone, 2,2-dimethyl-3-hydroxy-propionic acid, hydroxyisobutyric acid, and mixtures of these.

11. The process of claim 1, further comprising: molding the thermoplastic composition to provide an article.

12. The process of claim 1, further comprising: injection molding the thermoplastic composition to provide an article.

## Patentansprüche

1. Verfahren umfassend:
Erhitzen, in Gegenwart eines mild basischen/nucleophilen Veresterungskatalysators,
einer Monomermischung umfassend ein hyperverzweigendes Monomer ausgewählt aus der Gruppe bestehend aus:
Verbindungen, die zwei COOH-Gruppen und eine OH-Gruppe aufweisen,
Verbindungen, die eine COOH-Gruppe und zwei OH-Gruppen aufweisen,
Verbindungen, die eine COOH-Gruppe und drei OH-Gruppen aufweisen,
Verbindungen, die drei COOH-Gruppen und eine OH-Gruppe aufweisen,
um ein hyperverzweigtes Polymer bereitzustellen,
wobei der mild basische/nucleophile Veresterungskatalysator ausgewählt ist unter Carboxylaten, Alkoxiden, Oxiden und Organometallen von Zinn, Titan, Aluminium, Antimon, Mangan, Zink und Calcium und Mischungen dieser;
wobei das Verfahren Folgendes umfasst:
Schmelzmischen von:
i) 0,05 bis 10 Gewichtsprozent eines hyperverzweigten Polymers,
ii) eines oder mehrerer thermoplastischer Polyester; und
iii) 1 bis 50 Gewichtsprozent eines oder mehrerer Füllstoffe, um eine thermoplastische Zusammensetzung bereitzustellen, wobei:
der Gewichtsprozentsatz des hyperverzweigten Polymers, des einen oder der mehreren thermoplastischen Polyester und des einen oder der mehreren Füllstoffe auf dem Gesamtgewicht der thermoplastischen Zusammensetzung basiert; und
die thermoplastische Zusammensetzung eine Erhöhung der Schmelzviskosität von weniger als 10 %, wie in einer Aufenthaltszeit (HUT) zwischen 5 Minuten und 32 Minuten und ISO 11443 entsprechend bei 250 °C und einer Scherrate von 1000 s⁻¹ gemessen, aufweist.

2. Verfahren nach Anspruch 1, wobei das hyperverzweigte Polymer 0,1 bis 5 Gewichtsprozent des Gesamtgewichts des einen oder der mehreren thermoplastischen Polyester und des hyperverzweigten Polymers beträgt.

3. Verfahren nach Anspruch 1, wobei das hyperverzweigte Polymer ein zahlendurchschnittliches Molekulargewicht, durch Gelpermeationschromatografie bestimmt, im Bereich von 500 bis 20000 aufweist.

4. Verfahren nach Anspruch 1, wobei der eine oder die mehreren thermoplastischen Polyester unter Poly(ethylenterephthalat), Poly(trimethylenterephthalat), Poly(1,4-butylenterephthalat), Poly(ethylen-2,6-naphthoat) und Poly(1,4-cyclohexyldimethylenterephthalat), thermoplastischen Copolyesterelastomeren und Mischungen dieser ausgewählt sind.

5. Verfahren nach Anspruch 1, wobei der eine oder die mehreren thermoplastischen Polyester 30 bis 89,9 Gewichtsprozent der thermoplastischen Zusammensetzung von Poly(1,4-butylenterephthalat) umfassen.

6. Verfahren nach Anspruch 1, wobei mindestens einer des einen oder der mehreren thermoplastischen Polyester durch einen oder mehrere Copolymere auf Styrolbasis ersetzt wird.

7. Verfahren nach Anspruch 1, wobei der Füllstoff Glas ist, das bevorzugt mindestens 0,1 Gewichtsprozent organische Leimung aufweist.

8. Verfahren nach Anspruch 1, wobei die Monomermischung ferner eine Komponente umfasst ausgewählt aus der Gruppe bestehend aus:
a) einem Kettenverlängerungsmittel ausgewählt aus der Gruppe bestehend aus Hydroxycarbonsäuren, Lactonen und Mischungen dieser;
b) einem das Molekulargewicht regulierenden Mittel, das Funktionalitäten im Bereich von 1 bis 6 aufweist und aus der Gruppe ausgewählt ist bestehend aus Hydroxyl, Amin, Epoxid, Carboxyl und Mischungen dieser; und
c) Mischungen von a) und b).

9. Verfahren nach Anspruch 8, wobei:
das hyperverzweigende Monomer Dimethylpropionsäure ist;
das Kettenverlängerungsmittel unter Caprolacton, 2,2-Dimethyl-3-hydroxypropionsäure, Hydroxyisobuttersäure und Mischungen dieser ausgewählt wird; und
das das Molekulargewicht regulierende Mittel Pentaerythrit ist.

10. Verfahren nach Anspruch 1, wobei:
das hyperverzweigende Monomer Dimethylpropionsäure ist; und
das Kettenverlängerungsmittel unter Caprolacton, 2,2-Dimethyl-3-hydroxypropionsäure, Hydroxyisobuttersäure und Mischungen dieser ausgewählt wird.

11. Verfahren nach Anspruch 1, ferner Folgendes umfassend: Formen der thermoplastischen Zusammensetzung, um einen Artikel bereitzustellen.

12. Verfahren nach Anspruch 1, ferner Folgendes umfassend: Spritzgießen der thermoplastischen Zusammensetzung, um einen Artikel bereitzustellen.

## Revendications

1. Procédé, comprenant:
le chauffage en présence d'un catalyseur d'estérification légèrement basique/nucléophile
un mélange de monomères comprenant un monomère d'hyperramification sélectionné dans le groupe constitué des:
composés ayant deux groupes COOH et un groupe OH,
composés ayant un groupe COOH et deux groupes OH,
composés ayant un groupe COOH et trois groupes OH, et
composés ayant trois groupes COOH et un groupe OH;
pour fournir un polymère hyperramifié,
où le catalyseur d'estérification légèrement basique/nucléophile est sélectionné parmi les carboxylates, les alcoxydes, les oxydes, et les organométalliques d'étain, de titane, d'aluminium, d'antimoine, de manganèse, de zinc, et de calcium et les mélanges de ceux-ci;
le procédé comprenant:
le mélange à l'état fondu:
i) de 0,05 à 10 pour cent en poids d'un polymère hyperramifié,
ii) d'un ou plusieurs polyesters thermoplastiques; et
iii) de 1 à 50 pour cent en poids d'une ou plusieurs charges, pour fournir une composition thermoplastique, où:
le pourcentage en poids du polymère hyperramifié, du un ou des plusieurs polyesters thermoplastiques, et d'une ou plusieurs charges est basé sur le poids total de la composition thermoplastique; et
la composition thermoplastique fait preuve d'une augmentation de la viscosité à l'état fondu inférieure à 10 % telle que mesurée entre 5 minutes et 32 minutes de temps de maintien (HUT) et selon la norme ISO 11443 à 250°C et sous une fréquence de cisaillement de 1 000 s⁻¹.

2. Procédé selon la revendication 1, le polymère hyperramifié représentant de 0,1 à 5 pour cent en poids du poids total du un ou des plusieurs polyesters thermoplastiques et du polymère hyperramifié.

3. Procédé selon la revendication 1, le polymère hyperramifié ayant un poids moléculaire moyen en nombre déterminé par chromatographie par perméation sur gel situé dans la plage de 500 à 20 000.

4. Procédé selon la revendication 1, lesdits polyesters thermoplastiques étant sélectionnés, parmi le poly(téréphtalate d'éthylène), le poly(téréphtalate de triméthylène), le poly(téréphtalate de 1,4-butylène), le poly(2,6-naphtoate d'éthylène), et le poly(téréphtalate de 1,4-cyclohexyldiméthylène), les élastomères thermoplastiques de copolyester, et les mélanges de ceux-ci.

5. Procédé selon la revendication 1, le ou les polyesters thermoplastiques comprenant de 30 à 89,9 pour cent en poids de la composition thermoplastique de poly(téréphtalate de 1,4-butylène).

6. Procédé selon la revendication 1, au moins l'un du ou des polyesters thermoplastiques étant remplacé par un ou plusieurs copolymères à base de styrène.

7. Procédé selon la revendication 1, la charge étant le verre, préférablement ayant au moins 0,1 pour cent en poids d'apprêt organique.

8. Procédé selon la revendication 1, le mélange de monomères comprenant en outre un composant sélectionné dans le groupe constitué de:
a) un extenseur de chaîne sélectionné dans le groupe constitué des acides hydroxycarboxyliques, des lactones, et des mélanges de ceux-ci;
b) un agent de régulation du poids moléculaire ayant dans la plage de 1 à 6 fonctionnalités et sélectionné dans le groupe constitué des groupes hydroxyle, aminé, époxy, carboxyle, et des mélanges de celles-ci; et
c) de mélanges de a) et b).

9. Procédé selon la revendication 8, dans lequel:
le monomère d'hyperramification est l'acide diméthylolpropionique;
l'extenseur de chaîne est sélectionné parmi la caprolactone, l'acide 2,2-diméthyl-3-hydroxy-propionique, l'acide hydroxyisobutyrique, et les mélanges de ceux-ci; et
l'agent de régulation du poids moléculaire étant le pentaérythritol.

10. Procédé selon la revendication 1, dans lequel:
le monomère d'hyperramification est l'acide diméthylolpropionique; et
l'extenseur de chaîne est sélectionné parmi la caprolactone, l'acide 2,2-diméthyl-3-hydroxy-propionique, l'acide hydroxyisobutyrique, et les mélanges de ceux-ci.

11. Procédé selon la revendication 1, comprenant en outre: le moulage de la composition thermoplastique pour fournir un article.

12. Procédé selon la revendication 1, comprenant en outre: le moulage par injection de la composition thermoplastique pour fournir un article.
